Europäisches Patentamt

(19) European Patent Office

Office européen des brevets

(11) EP 0 881 516 A1

(12) **EUROPEAN PATENT APPLICATION**

(43) Date of publication:
02.12.1998 Bulletin 1998/49

(51) Int. Cl.⁶: **G02B 27/64**, G02B 15/163

(21) Application number: 98107034.5

(22) Date of filing: 23.11.1994

(84) Designated Contracting States:
**DE FR**

(30) Priority: **29.11.1993 JP 323282/93**
**18.03.1994 JP 74439/94**
**18.03.1994 JP 74440/94**

(62) Document number(s) of the earlier application(s) in accordance with Art. 76 EPC:
**94118425.1 / 0 655 638**

(71) Applicant: **NIKON CORPORATION**
**Tokyo (JP)**

(72) Inventor:
**Suzuki, Kenzaburo,**
**c/o NIKON CORPORATION**
**Tokyo (JP)**

(74) Representative: **Weser, Wolfgang**
**Dres. Weser & Martin,**
**Patentanwälte,**
**Radeckestrasse 43**
**81245 München (DE)**

Remarks:
This application was filed on 17 - 04 - 1998 as a divisional application to the application mentioned under INID code 62.

(54) **Lens capable of short distance photographing with vibration reduction function**

(57) A lens capable of a short distance photographing satisfies |βM| > 0.25 (βM is the photographing magnification at a shortest photographing distance). The lens includes a plurality of lens groups respectively having positive or negative refracting powers. At least one of intervals between two neighboring ones of the lens groups changes for focusing, and of the plurality of lens groups, at least one lens group or a partial lens group thereof, located at an image side of the lens group which is movable for focusing, is a vibration reduction lens group which is movable in a direction substantially perpendicular to an optical axis.

## FIG. 1

VIBRATION
REDUCTION
MECHANISM

**Description**

BACKGROUND OF THE INVENTION

Field of the Invention

The present invention relates to a lens capable of a short distance photographing (close-up) with a vibration reduction function, which is used in, e.g., a camera, a video camera, or the like and, more particularly, to a vibration reduction method for a lens capable of a short distance photographing or close-up (so-called a micro lens or macro lens).

Related Background Art

Conventionally, as disclosed in Japanese Laid-Open Patent Application Nos. 1-189621, 1-191112, and 1-191113, means for correcting a variation in image position caused by, e.g., a camera shake by moving all or some of lenses in a lens group in a direction substantially perpendicular to the optical axis when the photographing distance is infinity or a distance close to infinity (in a state having a photographing magnification of almost 0) is known.

Note that correcting a variation in image position caused by, e.g., a camera shake by moving the lens group in a direction substantially perpendicular to the optical axis will be referred to as "vibration reduction" in this specification.

However, in the above-mentioned prior arts, vibration reduction cannot be attained in a sufficiently large photographing magnification (e.g., ×-1/2) state, and is impossible to attain when the photographing magnification is in an almost one to one magnification (×-1) state.

Note that no vibration reduction techniques having sufficient imaging performance for a lens capable of a short distance photographing (close-up) have been disclosed in known references (including patent publications).

SUMMARY OF THE INVENTION

The present invention has been made in consideration of the above situation, and has as its object to provide a lens capable of a short distance photographing (close-up), which has a vibration reduction function, has a compact structure and high performance, and is suitably used for a photograph, video image, and the like.

This object is attained by the features of claim 1 and claim 8, respectively.

The lens capable of a short distance photographing (close-up) according to the first mode of the present invention also satisfies the following conditional formula:

$$0.25 < |\beta M| \tag{1}$$

where $\beta M$: the photographing magnification at the shortest photographing distance

Conditional formula (1) shows short distance focusing performance of an optical system according to the present invention as the lens capable of a short distance photographing (close-up), and at the same time, defines a range (lower limit value) of the photographing magnification at the practical shortest photographing distance.

When the photographing magnification is set to be lower than the lower limit value of conditional formula (1), the photographing magnification at the shortest photographing distance becomes too small to obtain sufficient short distance focusing performance, and is not suitable for a practical use.

When the lower limit value of conditional formula (1) is set to be 0.45, more sufficient short distance focusing performance can be assured.

In order to further improve imaging performance, the lens preferably satisfies the following conditional formulas (2) and (3) :

$$\Delta SLP/|fLP| < 0.1 \tag{2}$$

$$0.1 < fLP/fL < 2 \tag{3}$$

where fL: the focal length of the last lens group GL
fLP: the focal length of the vibration reduction lens group GLP in the last lens group GL
$\Delta SLP$: the maximum displacement amount, in the direction perpendicular to the optical axis, of the vibration reduction lens group GLP in the last lens group GL upon vibration reduction

Conditional formula (2) defines an appropriate range of the maximum displacement amount of the vibration reduction lens group GLP upon vibration reduction in association with the ratio to the focal length fLP of the vibration reduction lens group GLP. When the ratio exceeds the upper limit value of conditional formula (2), the maximum displacement amount of the vibration reduction lens group GLP in the last lens group GL upon vibration reduction becomes too large, and as a result, the aberration variation amount upon vibration reduction becomes large. In particular, at a peripheral position on the image plane, the difference, in the optical axis direction, between the best imaging plane in the meridional direction and the best imaging plane in the sagittal direction increases.

When the upper limit value of conditional formula (2) is set to be 0.03, imaging performance can be further improved.

Conditional formula (3) defines an appropriate range in association with the ratio between the focal length fLP of the vibration reduction lens group GLP and the focal length fL of the last lens group GL. When the ratio exceeds the upper limit value of conditional formula (3), the refracting power of the vibration reduction lens group GLP becomes too small. As a result, not only the spherical aberration tends to become excessive in the negative direction, but also a negative curvature of field tends to be generated. On the contrary, when the ratio is set to be lower than the lower limit value of conditional formula (3) , the refracting power of the vibration reduction lens group GLP becomes too large. As a result, not only the spherical aberration tends to become excessive in the positive direction, but a positive curvature of field tends to be generated. Also, the variations in various aberrations upon vibration reduction tend to become excessive.

When the upper limit value of conditional formula (3) is set to be 0.4, and its lower limit value is set to be 0.15, imaging performance can be further improved.

In order to further improve imaging performance, the lens desirably satisfies the following conditional formula (4) :

$$0.5 < |fL|/f < 4 \qquad\qquad (4)$$

where f: the focal length of the entire lens system in the infinity photographing state

Conditional formula (4) defines an appropriate range in association with the ratio between the focal length fL of the last lens group GL and the focal length f of the entire lens system in the infinity photographing state. When the ratio exceeds the upper limit value of conditional formula (4), the focal length fL of the last lens group GL having the negative refracting power at the most image side becomes too large, and as a result, the lens length becomes large, thus disturbing a compact structure as one of objects of the present invention. Also, the curvature of field and the spherical aberration tend to become excessive in the negative direction. On the contrary, when the ratio is set to be lower than the lower limit value of conditional formula (4), the focal length fL of the last lens group GL having the negative refracting power at the most image side becomes too small, and a result, the back focus is shortened. Also, the curvature of field and the spherical aberration tend to become excessive in the positive direction. Furthermore, a large positive distortion tends to be generated.

In order to further improve imaging performance and vibration reduction performance, in addition to the above-mentioned conditions, the lens desirably satisfies the following conditional formulas (5) and (6) :

$$\Delta SLP/D < 0.2 \qquad\qquad (5)$$

$$L/f < 0.5 \qquad\qquad (6)$$

where D: the effective diameter of the surface, at the most object side, of the vibration reduction lens group GLP
L: the on-axis thickness of the vibration reduction lens group GLP

Conditional formula (5) defines an appropriate range of the maximum displacement amount $\Delta SLP$ of the vibration reduction lens group GLP upon vibration reduction in association with the ratio to the effective diameter D of the surface, at the most object side, of the vibration reduction lens group GLP. When the ratio exceeds the upper limit value of conditional formula (5), in both the infinity photographing state and the short distance photographing state, stray light tends to be mixed within the effective diameter of the vibration reduction lens group GLP. When a stationary flare stop is arranged on the optical axis, the mixing of stray light can be eliminated. When the ratio exceeds the upper limit value of conditional formula (5), a mechanism for vibration reduction becomes bulky and complicated.

When the upper limit value of conditional formula (5) is set to be 0.08, imaging performance and vibration reduction performance can be further improved.

Conditional formula (6) defines an appropriate range of the ratio between the on-axis thickness of the vibration reduction lens group GLP and the focal length of the entire lens system in the infinity photographing state. When the ratio exceeds the upper limit value of conditional formula (6), the on-axis thickness of the vibration reduction lens group GLP becomes too large, resulting in a bulky and complicated mechanism for vibration reduction.

EP 0 881 516 A1

Upon construction of an actual vibration reduction lens group GLP, in addition to the above-mentioned conditions, the lens desirably satisfies the following formulas (7) and (8):

$$1.5 < N- \tag{7}$$

$$30 < \nu- \tag{8}$$

where N-:  the maximum one of refractive indices of negative lens components in the vibration reduction lens group GLP

ν-:  the minimum one of Abbe's numbers of the negative lens components in the vibration reduction lens group GLP

Note that N- and ν- respectively represent the refractive index and Abbe's number for the d-line ($\lambda$ = 587.6 nm).

When the refractive index is set to be lower than the lower limit value of conditional formula (7), in both the infinity photographing state and the short distance photographing state, the spherical aberration tends to become excessive in the positive direction, and the distortion tends to become large in the positive direction. Since the Petzval sum tends to shift in the negative direction, a large positive curvature of field tends to be generated.

When the Abbe's number is set to be lower than the lower limit value of conditional formula (8), in both the infinity photographing state and the short distance photographing state, the on-axis chromatic aberration at short wavelengths tends to become excessive in the positive direction.

In addition to the above-mentioned conditions, upon construction of an actual optical system of the second mode, the lens desirably satisfies the following conditions.

When a stationary flare stop is arranged on the optical axis in addition to an aperture stop, unnecessary rays can be shielded when the lens group is displaced across the optical axis for vibration reduction, and generation of a ghost and unnecessary exposure can be avoided.

The vibration reduction lens group GLP is preferably fixed along the optical axis in a short distance focusing state so as to simplify the holding and driving mechanisms.

In order to obtain good imaging performance by performing sufficient aberration correction in the short distance focusing state, the first and second lens groups G1 and G2 are preferably almost symmetrically arranged to sandwich the aperture stop therebetween. More specifically, the surface, at the most image side, of the first lens group G1 is preferably a diverging surface which is convex at the object side, and the surface, at the most image side, of the second lens group G2 is preferably a diverging surface which is convex at the object side.

In order to achieve satisfactory chromatic aberration correction in the short distance focusing state, each of the first and second lens groups G1 and G2 which move in the short distance focusing state and have a positive refracting power must include an achromatic lens. Therefore, each lens group must have at least one lens component having a negative refracting power.

At this time, in each of the first and second lens groups G1 and G2, a minimum Abbe's number $\nu m$ of the Abbe's numbers of negative lens components preferably satisfies the following conditional formula (9) :

$$\nu m < 38 \tag{9}$$

In order to further improve imaging performance, the refracting power distribution of the first and second lens groups G1 and G2 is important, and if the focal lengths of the first and second lens groups G1 and G2 are respectively represented by f1 and f2, the lens preferably satisfies the following conditional formula (10) :

$$1.5 < f1/f2 < 3.0 \tag{10}$$

Furthermore, since the depth at the object field side becomes smaller as the photographing magnification increases, an out-of-focus state tends to occur. In this case, an auto-focus system and a lens capable of a short distance photographing (close-up) of the present invention can be combined to avoid the above-mentioned out-of-focus state.

In the second mode of the present invention, a lens capable of a short distance photographing (close-up) which comprises, in turn from the object side, a first lens group G1 having a positive refracting power and a second lens group G2 having a negative refracting power at the object side, and comprises a last lens group GL having a positive refracting power at the most image side, and in which the interval between the first and second lens groups increases when focusing is effected from infinity to a short distance object, comprises displacement means for achieving vibration reduction by moving a partial lens group GLP having a positive refracting power in the last lens group GL in a direction substantially perpendicular to the optical axis, and satisfies the following condition:

4

$$0.25 < |\beta M|$$

where $\beta M$ is the photographing magnification at the shortest photographing distance.

When the focal length of the last lens group GL is represented by fL, the focal length of the entire lens system in the infinity photographing state is represented by f, the focal length of the partial lens group GLP in the last lens group GL is represented by fLP, and the maximum displacement amount, in the direction perpendicular to the optical axis, of the partial lens group upon vibration reduction is represented by ΔSLP, the lens capable of a short distance photographing (close-up) preferably satisfies the following conditions:

$$0.3 < fL/f < 1.5$$
$$\Delta SLP/fLP < 0.1$$

Also, the lens capable of a short distance photographing (close-up) preferably comprises, on the optical axis, a stationary flare stop for shielding unnecessary rays when the partial lens group GLP in the last lens group GL moves in the direction substantially perpendicular to the optical axis for vibration reduction.

In the second mode of the present invention, to be suitable for a lens capable of a short distance photographing (close-up) for a photograph, video image, or the like, the lens comprises, in turn from the object side, the first lens group G1 having the positive refracting power and the second lens group G2 having the negative refracting power at the object side, and comprises the last lens group GL having the positive refracting power at the most image side, and when focusing is effected from infinity to a short distance object, the interval between the first and second lens groups G1 and G2 increases. To explain a reason why the present invention adopts this arrangement, the features and merits of a lens capable of a short distance photographing (close-up) of this type will be briefly described below.

First, the lens capable of a short distance photographing (close-up) with the above arrangement can obtain good imaging performance at photographing magnifications including ×-1/2 and an equal magnification (×-1).

Since the second lens group G2 has a negative refracting power, a composite principal point of the first and second lens groups G1 and G2 can be located at the object side of the second lens group G2. For this reason, a compact structure can be advantageously achieved. Furthermore, since the moving amount of the second lens group G2 when focusing is effected from infinity to a short distance object can be set to be smaller than that of a conventional front-element extension type, the lens of the third mode is advantageous in arrangements of holding and driving mechanisms.

In addition, the Petzval sum of the lens as a whole can be well balanced by the effect of the negative refracting power of the second lens group G2, thus providing an advantage in aberration correction.

The present invention provides optimal conditions for vibration reduction for a lens capable of a short distance photographing (close-up) of a type suitable for a photograph, video image, or the like.

The conditions of the third mode of the present invention will be described in detail below.

First, in the lens capable of a short distance photographing (close-up) of the above-mentioned type, the first lens group G1 is the largest in size. For this reason, if the first lens group G1 is used as a vibration correction optical system which is displaced in the direction perpendicular to the optical axis, the holding and driving mechanisms are undesirably complicated and become bulky.

It is not preferable, either, if the second lens group G2 which moves along the optical axis upon focusing is used as a vibration correction optical system since the holding and driving mechanisms are undesirably complicated and become bulky.

For these reasons, according to the present invention, in order to simplify the mechanisms of the entire lens system and to attain good aberration characteristics upon vibration reduction, the displacement means is provided to a lens group at the most image side, i.e., the partial lens group GLP having the positive refracting power in the last lens group GL to perform vibration reduction. The partial lens group GLP will be referred to as a "vibration reduction lens group" hereinafter.

The lens capable of a short distance photographing (close-up) according to the third mode of the present invention satisfies the following conditional formula (11) in addition to the above-mentioned arrangement:

$$0.25 < |\beta M| \tag{11}$$

where $\beta M$:    the photographing magnification at the shortest photographing distance

Conditional formula (11) shows short distance focusing performance of an optical system according to the present invention as the lens capable of a short distance photographing (close-up), and at the same time, defines a range (lower limit value) of the photographing magnification at the practical shortest photographing distance.

When the photographing magnification is set to be lower than the lower limit value of conditional formula (11), the photographing magnification at the shortest photographing distance becomes too small to obtain sufficient short distance focusing performance, and is not suitable for a practical use.

When the lower limit value of conditional formula (11) is set to be 0.45, more sufficient short distance focusing performance can be assured.

In order to further improve imaging performance, the lens preferably satisfies the following conditional formulas (12) and (13):

$$0.3 < fL/f < 1.5 \tag{12}$$

$$\Delta SLP/fLP < 0.1 \tag{13}$$

where fL:    the focal length of the last lens group GL
f:              the focal length of the entire lens system in the infinity photographing state
fLP:          the focal length of the vibration reduction lens group GLP in the last lens group GL
$\Delta$SLP:    the maximum displacement amount, in the direction perpendicular to the optical axis, of the vibration reduction lens group GLP in the last lens group GL upon vibration reduction

Conditional formula (12) defines an appropriate range in association with the ratio between the focal length fL of the last lens group GL and the focal length f of the entire lens system in the infinity photographing state. When the ratio exceeds the upper limit value of conditional formula (12), the focal length fL of the last lens group GL becomes too large, and the total lens length is prolonged, thus disturbing a compact structure. In addition, the spherical aberration tends to become excessive in the negative direction. On the contrary, when the ratio is set to be lower than the lower limit value of conditional formula (12), the focal length fL of the last lens group GL becomes too small, the spherical aberration in the infinity photographing state tends to become excessive in the positive direction, and the variation in curvature of field in a short distance focusing state becomes large. In addition, the Petzval sum tends to largely shift in the positive direction, and as a result, a negative curvature of field tends to be generated.

When the upper limit value of conditional formula (12) is set to be 0.8, and its lower limit value is set to be 0.45, imaging performance can be further improved.

Conditional formula (13) defines an appropriate range of the maximum displacement amount $\Delta$SLP of the vibration reduction lens group GLP upon vibration reduction in association with the ratio to the focal length fLP of the vibration reduction lens group GLP. When the ratio exceeds the upper limit value of conditional formula (13), the maximum displacement amount of the vibration reduction lens group GLP in the last lens group GL upon vibration reduction becomes too large, and as a result, the aberration variation amount upon vibration reduction becomes large. In particular, at a peripheral position on the image plane, the difference, in the optical axis direction, between the best imaging plane in the meridional direction and the best imaging plane in the sagittal direction increases. When the upper limit value of conditional formula (13) is set to be 0.03, imaging performance can be further improved.

In order to further improve imaging performance, the lens desirably satisfies the following conditional formulas (14) and (15):

$$WD/f < 5.0 \tag{14}$$

$$|\Delta|/f < 0.5 \tag{15}$$

where WD:   the distance from an object to a lens surface, at the most object side, of the lens capable of a short distance photographing (close-up) in the shortest distance photographing state
$\Delta$:        the change amount of the on-axis air gap between the first and second lens groups G1 and G2 in the infinity photographing state and the shortest distance photographing state

Note that the sign of the change amount $\Delta$ is positive when the on-axis air gap increases, and is negative when it decreases.

Conditional formula (14) shows short distance focusing performance as a lens capable of a short distance photographing (close-up), and defines a practical range in association with the distance WD from an object to a lens surface, at the most object side, of the lens capable of a short distance photographing (close-up) in the shortest distance photographing state.

When the distance exceeds the upper limit of conditional formula (14), the distance WD to the object in the shortest distance photographing state becomes too large, and short distance focusing performance tends to become short.

When the upper limit value of conditional formula (14) is set to be 3.0, more sufficient short distance focusing performance can be assured.

When the change amount exceeds the upper limit of conditional formula (15), the moving amount of the second

6

lens group G2 in a focusing operation becomes too large, and the aberration variation amount in a short distance focusing state tends to become large. In particular, the spherical aberration, the curvature of field at the peripheral position on the image plane, and the astigmatism become undesirably large. In addition, the mechanical arrangement tends to be complicated.

In order to further improve imaging performance and vibration reduction performance, in addition to the above-mentioned conditions, the lens desirably satisfies the following conditional formulas (16) and (17):

$$0.5 < fLP/fL < 2.5 \tag{16}$$

$$L/f < 0.25 \tag{17}$$

where L: the on-axis thickness of the vibration reduction lens group GLP

Conditional formula (16) defines an appropriate range in association with the ratio between the focal length fLP of the vibration reduction lens group GLP and the focal length fL of the last lens group GL. When the ratio exceeds the upper limit value of conditional formula (16), in both the infinity photographing state and the short distance photographing state, not only the spherical aberration tends to become excessive in the positive direction, but also the distortion becomes large in the positive direction. On the contrary, when the ratio is set to be lower than the lower limit value of conditional formula (16), the focal length fLP of the vibration reduction lens group GLP becomes too small. As a result, not only the spherical aberration becomes excessive in the negative direction, but also a negative curvature of field tends to be generated.

Also, variations in various aberrations upon vibration reduction tend to become excessive.

When the upper limit value of conditional formula (16) is set to be 1.8, and its lower limit value is set to be 1.0, imaging performance and vibration reduction performance can be further improved.

Conditional formula (17) defines an appropriate range in association with the ratio between the on-axis thickness of the vibration reduction lens group GLP and the focal length of the entire lens system in the infinity photographing state. When the ratio exceeds the upper limit value of conditional formula (17), the on-axis thickness of the vibration reduction lens group GLP becomes too large, and as a result, the mechanism for vibration reduction tends to be bulky and complicated.

Upon construction of an actual vibration reduction lens group GLP, in addition to the above-mentioned conditions, the lens desirably satisfies the following formulas (18) and (19):

$$1.5 < N+ \tag{18}$$

$$40 < \nu+ \tag{19}$$

where N+: the maximum one of refractive indices of positive lens components in the vibration reduction lens group GLP

$\nu+$: the minimum one of Abbe's numbers of the positive lens components in the vibration reduction lens group GLP

Note that N+ and $\nu+$ respectively represent the refractive index and Abbe's number for the d-line ($\lambda$ = 587.6 nm).

When the refractive index is set to be lower than the lower limit value of conditional formula (18), in both the infinity photographing state and the short distance photographing state, the spherical aberration tends to become excessive in the negative direction, and the distortion tends to become large in the negative direction. Since the Petzval sum tends to shift in the positive direction, a large negative curvature of field tends to be generated.

When the Abbe's number is set to be lower than the lower limit value of conditional formula (19), in both the infinity photographing state and the short distance photographing state, the on-axis chromatic aberration at short wavelengths tends to become excessive in the negative direction.

In addition to the above-mentioned conditions, upon construction of an actual optical system of the second mode, the lens desirably satisfies the following conditions.

When a stationary flare stop is arranged on the optical axis in addition to an aperture stop, unnecessary rays can be shielded when the lens group is displaced across the optical axis for vibration reduction, and generation of a ghost and unnecessary exposure can be avoided.

The vibration reduction lens group GLP is preferably fixed along the optical axis in a short distance focusing state so as to simplify the holding and driving mechanisms.

When the vibration reduction lens group GLP is constituted by a single lens, it is preferably constituted by a biconvex lens or a meniscus lens which has a surface having a strong radius of curvature facing the object side.

In order to obtain good imaging performance upon construction of the entire lens system capable of a short distance photographing (close-up), the refracting power distribution of the first and second lens groups G1 and G2 is important, and if the focal lengths of the first and second lens groups G1 and G2 are respectively represented by f1 and f2, the lens preferably satisfies the following conditional formula (20):

$$1.2 < f1/|f2| < 2.0 \qquad (20)$$

In order to further improve imaging performance, an aperture stop S is preferably arranged near the second lens group G2 or the last lens group GL. In addition, the vibration reduction lens group GLP is preferably arranged at the image side of the aperture stop S.

When the lens capable of a short distance photographing (close-up) of the present invention is constituted by the first lens group G1 having a positive refracting power, the second lens group G2 having a negative refracting power, and the last lens group GL having a positive refracting power, it is desirable to set rays between the second lens group G2 and the last lens group GL to be a substantially parallel system.

When the first lens group G1 is divided into a plurality of lens groups, and the air gap between two adjacent lens groups is to be changed in a short distance focusing state, imaging performance can be further improved (see the seventh embodiment).

Furthermore, the second lens group G2 is preferably constituted to include at least two lens groups having a negative refracting power.

When the vibration reduction lens group GLP is aligned at the image side of the central position in the last lens group GL, a variation in spherical aberration upon vibration reduction can be reduced.

When the last lens group GL having a positive refracting power at the most image side is arranged, a cemented lens of negative and positive lenses is preferably arranged at the most object side.

Furthermore, since the depth at the object field side becomes smaller as the photographing magnification increases, an out-of-focus state tends to occur. In this case, an auto-focus system and a lens capable of a short distance photographing (close-up) of the present invention can be combined to avoid the above-mentioned out-of-focus state.

## BRIEF DESCRIPTION OF THE DRAWINGS

Fig. 1 is a view showing the arrangement of a lens capable of a short distance photographing (close-up) according to the first embodiment of the present invention;

Fig. 2 is a view showing the arrangement of a lens capable of a short distance photographing (close-up) according to the second embodiment of the present invention;

Fig. 3 is a view showing the arrangement of a lens capable of a short distance photographing (close-up) according to the third embodiment of the present invention; and

Fig. 4 is a view showing the arrangement of a lens capable of a short distance photographing (close-up) according to the fourth embodiment of the present invention.

## DETAILED DESCRIPTION OF THE PREFERRED EMBODIMENTS

The first and second embodiments of the present invention will be described below.

In each of these embodiments, a lens capable of a short distance photographing (close-up) with a vibration reduction function according to the first mode of the present invention, which comprises, in turn from the object side, a first lens group G1 having a positive refracting power and a second lens group G2 having a positive refracting power at the object side, and comprises a third lens group GL which is arranged at the most image side and serves as a last lens group having a negative refracting power, and in which the first and second lens groups G1 and G2 move toward the object side when focusing is effected from infinity to a short distance object, comprises a displacement means 1 for achieving vibration reduction by moving a partial lens group GLP having a negative refracting power in the third lens group (last lens group) GL in a direction substantially perpendicular to the optical axis.

[ First Embodiment]

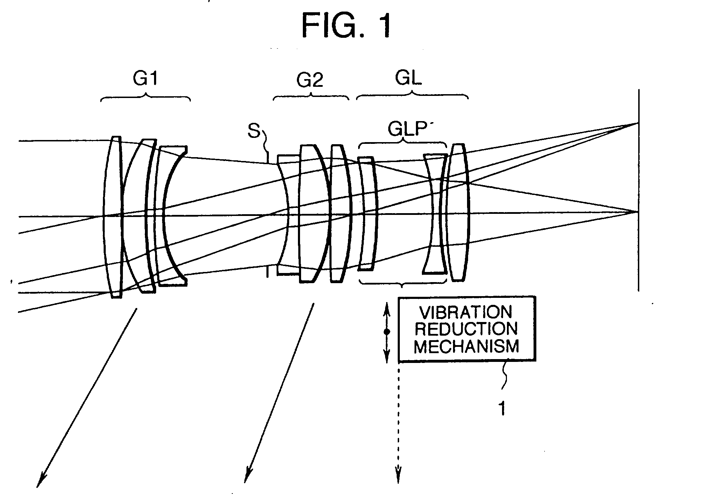

Fig. 1 is a view showing the arrangement of a lens capable of a short distance photographing (close-up) according to the first embodiment of the present invention. The lens capable of a short distance photographing (close-up) shown in Fig. 1 is constituted by, in turn from the object side, a first lens group G1 which comprises a biconvex lens, a positive meniscus lens having a convex surface facing the object side, and a negative meniscus lens having a convex surface facing the object side, a second lens group G2 which comprises a cemented lens of a negative meniscus lens having

8

a concave surface facing the object side and a positive meniscus lens having a concave surface facing the object side, and a biconvex lens, and a third lens group GL which comprises a positive meniscus lens having a concave surface facing the object side, a biconcave lens, and a biconvex lens.

Note that of the third lens group GL, the positive meniscus lens having the concave surface facing the object side and the biconcave lens constitute a vibration reduction lens group GLP having a negative refracting power as a whole. Also, an aperture stop S is arranged between the first and second lens groups G1 and G2, as shown in Fig. 1.

Fig. 1 shows the positional relationship among the lens groups in an infinity photographing state, and when focusing is effected to a short distance, the lens groups move on the optical axis along paths indicated by arrows in Fig. 1. Note that the third lens group GL is fixed in position in the optical axis direction. The vibration reduction lens group GLP as a partial lens group of the third lens group GL is appropriately moved in a direction substantially perpendicular to the optical axis by a vibration reduction mechanism 1 as the displacement means, thereby correcting a blur of an image caused by, e.g., a camera shake.

In the fourth embodiment, the present invention is applied to a photograph lens having a relatively short focal length.

Table 1 below summarizes data values of the fourth embodiment of the present invention. In Table 1, f is the focal length in the infinity state, $\beta$ is the photographing magnification at a short distance, $F_{NO}$ is the f-number in the infinity state, $2\omega$ is the field angle in the infinity state, and Bf is the back focus. Furthermore, numerals in the leftmost column represent the order of lens surfaces, r is the radius of curvature of each lens surface, d is the lens surface interval, n (D) and $\nu$ are respectively the refractive index and Abbe's number for the d-line ($\lambda$ = 587.6 nm), and n (G) is the refractive index for the g-line ($\lambda$ = 435.8 nm).

Table 1

f = 105

$F_{NO}$ = 2.86

2ω = 23.06°

|  | r | d | ν | n(D) | n(G) |
|---|---|---|---|---|---|
| 1 | 89.1351 | 4.3000 | 55.60 | 1.69680 | 1.71232 |
| 2 | -825.4576 | 0.2000 | | | |
| 3 | 34.3250 | 6.0000 | 55.60 | 1.69680 | 1.71232 |
| 4 | 84.7777 | 2.0000 | | | |
| 5 | 177.7491 | 2.0000 | 35.70 | 1.62588 | 1.64852 |
| 6 | 26.8115 | (d6=variable) | | | |
| 7 | -30.2229 | 2.0000 | 33.75 | 1.64831 | 1.67323 |
| 8 | -2217.9336 | 7.5000 | 53.75 | 1.69350 | 1.70959 |
| 9 | -38.6200 | 0.2000 | | | |
| 10 | 637.4222 | 4.3000 | 50.19 | 1.72000 | 1.73797 |
| 11 | -68.9166 | (d11=variable) | | | |
| 12 | -91.5340 | 3.5000 | 25.50 | 1.80458 | 1.84631 |
| 13 | -57.7982 | 13.0298 | | | |
| 14 | -43.9910 | 2.0000 | 40.90 | 1.79631 | 1.82109 |
| 15 | 79.4290 | 1.5000 | | | |
| 16 | 80.0850 | 4.5000 | 49.52 | 1.74429 | 1.76323 |
| 17 | -111.5190 | (Bf) | | | |

(Variable Interval Upon Short Distance Focusing)

| f, β | 105.00000 | -0.50000 | -1.00000 |
|---|---|---|---|
| d6 | 29.60250 | 27.91740 | 26.26180 |
| d11 | 3.33120 | 37.03340 | 70.14590 |
| Bf | 42.15420 | 42.15420 | 42.15420 |

(Vibration Reduction Data)

| | Infinity | Photographing Magnification (-1/2) | Photographing Magnification (-1) |
|---|---|---|---|
| Moving Amount of Vibration Reduction Lens Group in Direction Perpendicular to Optical Axis (mm) | 0.80 | 0.80 | 0.80 |
| Moving Amount of Image (mm) | -0.752 | -0.752 | -0.752 |
| (The negative sign of the moving amount of an image indicates a direction opposite to the moving direction.) | | | |

(Condition Corresponding Values)

βM = -1.0
f = 105.000
fL = -187.109
fLP = -46.723
f1 = 183.937
f2 = 85.879
D = 24.7
L = 18.5298
ΔSLP = 0.8
(1) |βM| = 1.0
(2) ΔSLP/|fLP| = 0.0171
(3) fLP/fL = 0.24971
(4) |fL|/f = 1.78199
(5) ΔSLP/D = 0.0324
(6) L/f = 0.176
(7) N- = 1.79631
(8) ν- = 40.90
(9) νm = 33.75
(10) f1/f2 = 2.142

[ Second Embodiment]

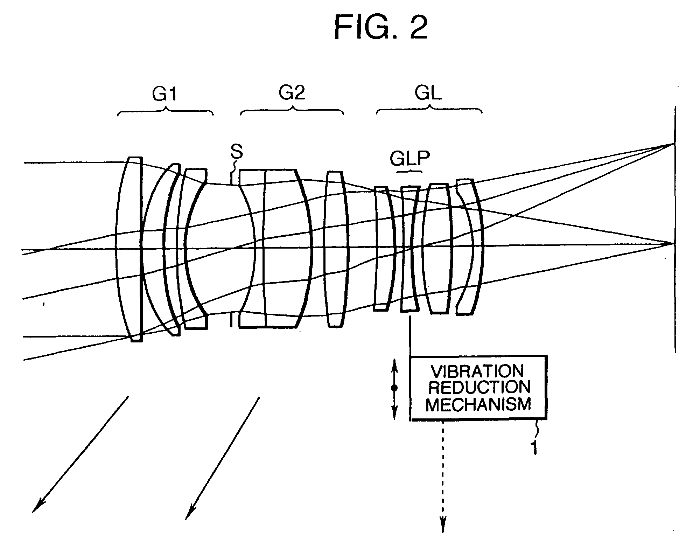

Fig. 2 is a view showing the arrangement of a lens capable of a short distance photographing (close-up) according to the second embodiment of the present invention. The lens capable of a short distance photographing (close-up) shown in Fig. 2 is constituted by, in turn from the object side, a first lens group G1 which comprises a biconvex lens, a positive meniscus lens having a convex surface facing the object side, and a negative meniscus lens having a convex surface facing the object side, a second lens group G2 which comprises a cemented lens of a biconcave lens and a biconvex lens, and a biconvex lens, and a third lens group GL which comprises a positive meniscus lens having a concave surface facing the object side, a biconcave lens, and a biconvex lens.

Note that of the third lens group GL, the biconcave lens constitutes a vibration reduction lens group GLP having a negative refracting power. Also, an aperture stop S is arranged between the first and second lens groups G1 and G2, as shown in Fig. 2.

Fig. 2 shows the positional relationship among the lens groups in an infinity photographing state, and when focusing is effected to a short distance, the lens groups move on the optical axis along paths indicated by arrows in Fig. 5. Note that the third lens group GL is fixed in position in the optical axis direction. The vibration reduction lens group GLP as a partial lens group of the third lens group GL is appropriately moved in a direction substantially perpendicular to the optical axis by a vibration reduction mechanism 1 as the displacement means, thereby correcting a blur of an image caused by, e.g., a camera shake.

In the second embodiment as well, the present invention is applied to a photograph lens having a relatively short focal length.

Table 2 below summarizes data values of the second embodiment of the present invention. In Table 2, f is the focal length in the infinity state, β is the photographing magnification at a short distance, $F_{NO}$ is the f-number in the infinity state, 2ω is the field angle in the infinity state, and Bf is the back focus. Furthermore, numerals in the leftmost column represent the order of lens surfaces, r is the radius of curvature of each lens surface, d is the lens surface interval, n and $\nu$ are respectively the refractive index and Abbe's number for the d-line ($\lambda$ = 587.6 nm), and n (G) is the refractive index for the g-line ($\lambda$ = 435.8 nm).

Table 2

$$f = 105.0000$$
$$F_{NO} = 2.80$$
$$2\omega = 23.14°$$

| | r | d | $\nu$ | n(D) | n(G) |
|---|---|---|---|---|---|
| 1 | 74.5230 | 5.0000 | 49.44 | 1.77279 | 1.79232 |
| 2 | -1424.0100 | 0.1500 | | | |
| 3 | 28.6450 | 5.0000 | 50.28 | 1.72000 | 1.73794 |
| 4 | 52.7010 | 2.0000 | | | |
| 5 | 87.0120 | 2.0000 | 35.19 | 1.74950 | 1.77694 |
| 6 | 24.5736 | (d6=variable) | | | |
| 7 | -32.5290 | 2.0000 | 31.15 | 1.68893 | 1.71775 |
| 8 | 344.8550 | 10.5000 | 51.11 | 1.73350 | 1.75137 |
| 9 | -41.8010 | 3.0000 | | | |
| 10 | 178.0190 | 5.0000 | 53.76 | 1.69350 | 1.70961 |
| 11 | -91.1694 | (d11=variable) | | | |
| 12 | -199.1380 | 4.0000 | 35.64 | 1.62588 | 1.64855 |
| 13 | -55.6910 | 2.0000 | | | |
| 14 | -114.2360 | 1.8000 | 45.52 | 1.79668 | 1.81874 |
| 15 | 50.8710 | 1.8000 | | | |
| 16 | 47.2130 | 6.0000 | 35.64 | 1.62588 | 1.64855 |
| 17 | -234.3140 | 4.6000 | | | |
| 18 | -38.3740 | 2.0000 | 39.59 | 1.80454 | 1.83041 |
| 19 | -76.9281 | (Bf) | | | |

(Variable Interval Upon Short Distance Focusing)

| f, β | 105.00000 | -0.50000 |
|---|---|---|
| d6 | 15.15181 | 21.84721 |
| d11 | 6.15144 | 32.39224 |
| Bf | 43.74657 | 43.74657 |

(Vibration Reduction Data)

| | Infinity | Photographing Magnification (-1/2) |
|---|---|---|
| Moving Amount of Vibration Reduction Lens Group in Direction Perpendicular to Optical Axis (mm) | 0.20 | 0.20 |
| Moving Amount of Image (mm) | -0.261 | -0.261 |
| (The negative sign of the moving amount of an image indicates a direction opposite to the moving direction.) | | |

(Condition Corresponding Values)

$\beta M = -0.5$
$f = 105.000$
$fL = -118.525$
$fLP = -43.967$
$f1 = 153.000$
$f2 = 80.769$
$D = 24.52$
$L = 1.8$
$\Delta SLP = 0.2$
(1) $|\beta M| = 0.5$
(2) $\Delta SLP/|fLP| = 0.00455$
(3) $fLP/fL = 0.37095$
(4) $|fL|/f = 1.12881$
(5) $\Delta SLP/D = 0.0082$
(6) $L/f = 0.0171$
(7) $N- = 1.79668$
(8) $\nu- = 45.37$
(9) $\nu m = 31.15$
(10) $f1/f2 = 1.894$

The third and fourth embodiments of the present invention will be described below.

In each of these embodiments, a lens capable of a short distance photographing (close-up) with a vibration reduction function according to the second mode of the present invention, which comprises, in turn from the object side, a first lens group G1 having a positive refracting power and a second lens group G2 having a negative refracting power at the object side, and comprises a third lens group GL which is arranged at the most image side and serves as a last lens group having a positive refracting power, and in which the interval between the first and second lens groups G1 and G2 increases when focusing is effected from infinity to a short distance object, comprises a displacement means 1 for achieving vibration reduction by moving a partial lens group GLP having a positive refracting power in the third lens group (last lens group) GL in a direction substantially perpendicular to the optical axis.

[Third Embodiment]

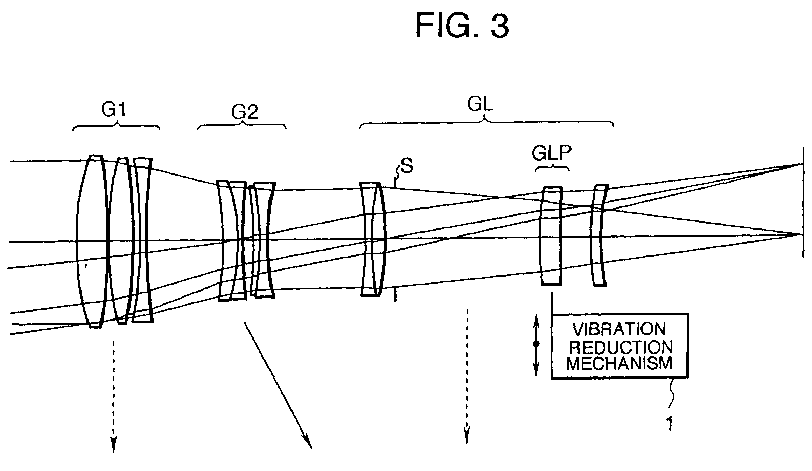

Fig. 3 is a view showing the arrangement of a lens capable of a short distance photographing (close-up) according to the third embodiment of the present invention. The lens capable of a short distance photographing (close-up) shown in Fig. 3 is constituted by, in turn from the object side, a first lens group G1 which comprises a biconvex lens, a biconvex lens, and a biconcave lens, a second lens group G2 which comprises a cemented lens of a positive meniscus lens having a concave surface facing the object side and a biconcave lens, and a cemented lens of a positive meniscus lens having a concave surface facing the object side and a biconcave lens, and a third lens group GL which comprises a cemented lens of a biconcave lens and a biconvex lens, a positive meniscus lens having a convex surface facing the object side, and a negative meniscus lens having a convex surface facing the object side.

Note that of the third lens group GL, the positive meniscus lens having the convex surface facing the object side constitutes a vibration reduction lens group GLP having a positive refracting power. Also, an aperture stop S is arranged the third lens group GL, as shown in Fig. 3.

Fig. 3 shows the positional relationship among the lens groups in an infinity photographing state, and when focusing is effected to a short distance, the second lens group G2 moves on the optical axis along a path indicated by an arrow in Fig. 6. Note that the first and third lens groups G1 and GL are fixed in position in the optical axis direction. The vibration reduction lens group GLP as a partial lens group of the third lens group GL is appropriately moved in a direction substantially perpendicular to the optical axis by a vibration reduction mechanism 1 as the displacement means, thereby correcting a blur of an image caused by, e.g., a camera shake.

In the third embodiment, the present invention is applied to a photograph lens having a relatively long focal length.

Table 3 below summarizes data values of the third embodiment of the present invention. In Table 3, f is the focal length in the infinity state, $\beta$ is the photographing magnification at a short distance, $F_{NO}$ is the f-number in the infinity state, $2\omega$ is the field angle in the infinity state, and Bf is the back focus. Furthermore, numerals in the leftmost column represent the order of lens surfaces, r is the radius of curvature of each lens surface, d is the lens surface interval, n (D) and $\nu$ are respectively the refractive index and Abbe's number for the d-line ($\lambda$ = 587.6 nm), and n (G) is the refractive index for the g-line ($\lambda$ = 435.8 nm).

Table 3

f = 200

F_{NO} = 4.03

2ω = 12.24°

| | r | d | ν | n(D) | n(G) |
|---|---|---|---|---|---|
| 1 | 106.1200 | 8.1000 | 69.98 | 1.52000 | 1.52908 |
| 2 | -244.4800 | 0.5000 | | | |
| 3 | 97.6400 | 8.5000 | 69.98 | 1.52000 | 1.52908 |
| 4 | -107.2300 | 0.7000 | | | |
| 5 | -103.7400 | 2.4000 | 30.04 | 1.69895 | 1.72942 |
| 6 | 1192.6899 | (d6=variable) | | | |
| 7 | -110.5700 | 4.0000 | 28.34 | 1.72825 | 1.76206 |
| 8 | -55.6700 | 2.0000 | 64.10 | 1.51680 | 1.52667 |
| 9 | 210.7400 | 2.5000 | | | |
| 10 | -211.9600 | 2.0000 | 28.34 | 1.72825 | 1.76206 |
| 11 | -97.7000 | 2.0000 | 64.10 | 1.51680 | 1.52667 |
| 12 | 53.5071 | (d12=variable) | | | |
| 13 | -140.6472 | 1.5000 | 35.51 | 1.59507 | 1.61681 |
| 14 | 84.3489 | 5.0000 | 58.54 | 1.61272 | 1.62571 |
| 15 | -58.5014 | 45.2000 | | | |
| 16 | 99.1934 | 6.0000 | 60.14 | 1.62041 | 1.63317 |
| 17 | 57107.6968 | 10.0000 | | | |
| 18 | 172.1229 | 2.5000 | 49.45 | 1.77279 | 1.79232 |
| 19 | 79.4832 | (Bf) | | | |

(Variable Interval Upon Short Distance Focusing)

| f, β | 200.00000 | -0.50000 |
|---|---|---|
| d6 | 22.29075 | 47.29075 |
| d12 | 29.58233 | 4.58233 |
| Bf | 65.47270 | 65.47270 |

(Vibration Reduction Data)

| | Infinity | Photographing Magnification (-1/2) |
|---|---|---|
| Moving Amount of Vibration Reduction Lens Group in Direction Perpendicular to Optical Axis (mm) | 1.20 | 1.20 |
| Moving Amount of Image (mm) | -0.645 | 0.645 |
| (The positive sign of the moving amount of an image indicates the same direction as the moving direction.) | | |

(Condition Corresponding Values)

$\beta M = -0.5$
$f = 200.0$
$fL = 120.0$
$fLP = 160.156$
$f1 = 100.0$
$f2 = -60.0$
$WD = 499.076$
$\Delta = 25.0$
$L = 6.0$
(1) $|\beta M| = 0.5$
(2) $fL/f = 0.600$
(3) $\Delta SLP/fLP = 0.00750$
(4) $WD/f = 2.4954$
(5) $|\Delta|/f = 0.1250$
(6) $fLP/fL = 1.3346$
(7) $L/f = 0.03$
(8) $N+ = 1.62041$
(9) $\nu+ = 60.14$
(10) $f1/|f2| = 1.667$

[ Fourth Embodiment]

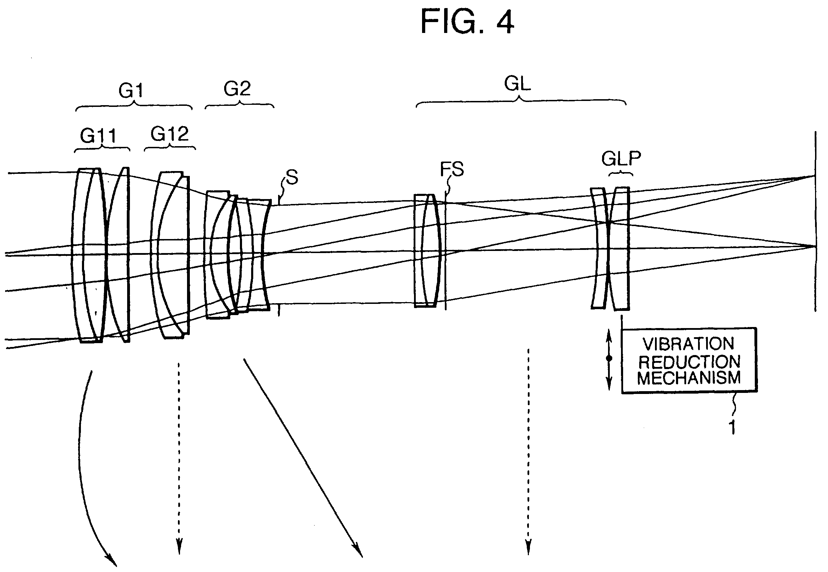

Fig. 4 is a view showing the arrangement of a lens capable of a short distance photographing (close-up) according to the fourth embodiment of the present invention. The lens capable of a short distance photographing (close-up) shown in Fig. 4 is constituted by, in turn from the object side, a first lens group G1 which comprises a cemented lens of a negative meniscus lens having a convex surface facing the object side and a biconvex lens, a positive meniscus lens having a convex surface facing the object side, and a cemented lens of a negative meniscus lens having a convex surface facing the object side and a positive meniscus lens having a convex surface facing the object side, a second lens group G2 which comprises a cemented lens of a negative meniscus lens having a convex surface facing the object side and a positive meniscus lens having a convex surface facing the object side, and a cemented lens of a positive meniscus lens having a concave surface facing the object side and a biconcave lens, and a third lens group GL which comprises a cemented lens of a negative meniscus lens having a convex surface facing the object side and a biconvex lens, a negative meniscus lens having a concave surface facing the object side, and a positive meniscus lens having a convex surface facing the object side.

Note that of the third lens group GL, the positive meniscus lens having the convex surface facing the object side constitutes a vibration reduction lens group GLP having a positive refracting power. Also, an aperture stop S is arranged between the second and third lens groups G2 and GL, and a stationary flare stop FS is arranged in the third lens group GL, as shown in Fig. 4.

Of the first lens group G1, the cemented lens of the negative meniscus lens having the convex surface facing the object side and the biconvex lens, and the positive meniscus lens having the convex surface facing the object side constitute a front group G11, and the cemented lens of the negative meniscus lens having the convex surface facing the object side and the positive meniscus lens having the convex surface facing the object side constitutes a rear group G12.

Fig. 4 shows the positional relationship among the lens groups in an infinity photographing state, and when focusing is effected to a short distance, the front group G11 of the first lens group G1 and the second lens group G2 move on the optical axis along paths indicated by arrows in Fig. 4. Note that the rear group G12 of the first lens group and the third lens group GL are fixed in position in the optical axis direction. The vibration reduction lens group GLP as a partial lens group of the third lens group GL is appropriately moved in a direction substantially perpendicular to the optical axis by a vibration reduction mechanism 1 as the displacement means, thereby correcting a blur of an image caused by, e.g., a camera shake.

In the fourth embodiment as well, the present invention is applied to a photograph lens having a relatively long focal length.

Table 4 below summarizes data values of the seventh embodiment of the present invention. In Table 4, f is the focal length in the infinity state, $\beta$ is the photographing magnification at a short distance, $F_{NO}$ is the f-number in the infinity state, $2\omega$ is the field angle in the infinity state, and Bf is the back focus. Furthermore, numerals in the leftmost column represent the order of lens surfaces, r is the radius of curvature of each lens surface, d is the lens surface interval, n and $\nu$ are respectively the refractive index and Abbe's number for the d-line ($\lambda$ = 587.6 nm), and n (G) is the refractive index for the g-line ($\lambda$ = 435.8 nm).

Table 4

f = 199.997

$F_{NO}$ = 4.00

2ω = 12.32°

| | r | d | ν | n(D) | n(G) |
|---|---|---|---|---|---|
| 1 | 197.7383 | 2.5000 | 33.89 | 1.80384 | 1.83464 |
| 2 | 85.6098 | 7.0000 | 82.52 | 1.49782 | 1.50527 |
| 3 | -206.2828 | 0.3000 | | | |
| 4 | 71.6067 | 6.0000 | 82.52 | 1.49782 | 1.50527 |
| 5 | 431.0537 | (d5=variable) | | | |
| 6 | 79.0168 | 2.5000 | 40.90 | 1.79631 | 1.82107 |
| 7 | 39.9554 | 8.8000 | 60.64 | 1.60311 | 1.61540 |
| 8 | 478.7420 | (d8=variable) | | | |
| 9 | 196.4322 | 2.0000 | 57.03 | 1.62280 | 1.63639 |
| 10 | 31.4573 | 5.0000 | 33.89 | 1.80384 | 1.83464 |
| 11 | 62.3232 | 3.7000 | | | |
| 12 | -105.6139 | 4.0000 | 25.41 | 1.80518 | 1.84731 |
| 13 | -58.9450 | 2.0000 | 60.14 | 1.62041 | 1.63317 |
| 14 | 49.1628 | (d14=variable) | | | |
| 15 | 1206.1834 | 2.0000 | 31.08 | 1.68893 | 1.71783 |
| 16 | 69.6055 | 6.0000 | 60.14 | 1.62041 | 1.63317 |
| 17 | -59.1728 | 46.5000 | | | |
| 18 | -72.7684 | 2.5000 | 49.45 | 1.77279 | 1.79232 |
| 19 | -436.1421 | 0.4000 | | | |
| 20 | 86.7935 | 6.0000 | 45.87 | 1.54814 | 1.56328 |
| 21 | 799.3808 | (Bf) | | | |

(Variable Interval Upon Short Distance Focusing)

| f, β | 199.99700 | -0.50000 | -1.00000 |
|------|-----------|----------|----------|
| d5 | 6.64330 | 14.20990 | 6.64330 |
| d8 | 5.14048 | 17.75138 | 37.14078 |
| d14 | 45.12495 | 32.51405 | 13.12465 |
| Bf | 58.80870 | 58.80870 | 58.80870 |

(Vibration Reduction Data)

| | Infinity | Photographing Magnification (-1/2) | Photographing Magnification (-1) |
|---|---|---|---|
| Moving Amount of Vibration Reduction Lens Group in Direction Perpendicular to Optical Axis (mm) | 1.00 | 1.00 | 1.00 |
| Moving Amount of Image (mm) | 0.566 | 0.566 | 0.566 |
| (The positive sign of the moving amount of an image indicates the same direction as the moving direction.) | | | |

(Condition Corresponding Values)

$\beta M = -1.0$
$f = 200.0$
$fL = 120.0$
$fLP = 177.100$
$f1 = 80.000$
$f2 = -48.0$
$WD = 272.364$
$\Delta = 32.0$
$L = 6.0$
(1) $|\beta M| = 1.0$
(2) $fL/f = 0.600$
(3) $\Delta SLP/fLP = 0.00565$
(4) $WD/f = 1.3618$
(5) $|\Delta|/f = 0.16$
(6) $fLP/fL = 1.4758$
(7) $L/f = 0.03$
(8) $N+ = 1.54814$
(9) $\nu+ = 45.87$
(10) $f1/|f2| = 1.667$

As described above, according to the present invention, a lens capable of a short distance photographing (close-up), which comprises a vibration reduction function, has a relatively long focal length, and is suitable for, e.g., a photograph, video image, and the like, can be provided.

For this reason, the lens allows a hand-held photographing operation, and is very convenient for an actual photographing operation. In addition, the lens realizes a photographing operation under a vibration condition caused by, e.g., a camera shake with good imaging performance.

**Claims**

1. A lens system capable of short distance photographing, comprising as seen from the object side in the indicated order:

- a first lens group (G1) having a positive refracting power;
- a second lens group (G2) having a positive refracting power; and
- a last lens group (GL) nearest to the image side having a negative refracting power; wherein
- when focusing is effected from infinity to a short distance, said first and second lens groups (G1, G2) move toward the object side,
- a partial lens group (GLP) of said last lens group (GL) having a negative refracting power is a vibration reduction lens group, which is movable in a direction substantially perpendicular to the optical axis of the lens system,
- the lateral magnification βM of the lens system at the shortest photographing distance satisfies the condition

    |βM| > 0.25,

- and at least two intervals between two adjacent lens groups change for focusing.

2. A lens system according to claim 1, wherein

    said partial lens group (GLP) in said last lens group (GL) is fixed in position along the optical axis in a short distance focusing state.

3. A lens system according to claim 1 or 2,
   satisfying the conditions

    ΔSLP/|fLP| < 1.0
    0.1 < fLP/fL < 2

   where

    fL is the focal length of said last lens group (G1),
    fLP is the focal length of said partial lens group (GLP) in said last lens group (GL), and
    ΔSLP is the maximum displacement amount of said partial lens group (GLP) in a direction perpendicular to the optical axis upon vibration reduction.

4. A lens system according to claim 1, 2 or 3,
   satisfying the condition

    0.5 < |fL|/f < 4

   where

    fL is the focal length of said last lens group (GL), and
    f is the focal length of the entire lens system in an infinity photographing state.

5. A lens system according to any one of claims 1 to 4,
   satisfying the conditions

    ΔSLP/D < 0.2
    L/f < 0.5

   where

    D is the effective diameter of a surface nearest to the object side of said partial lens group in said last lens group (GL),
    ΔSLP is the maximum displacement amount of said partial lens group (GLP) in a direction perpendicular to the optical axis upon vibration reduction,
    L is the on-axis thickness of said partial lens group (GLP), and

f is the focal length of the entire lens system in an infinity photographing state.

6. A lens system according to any one of claims 1 to 5,
satisfying the conditions

$$1.5 < N\text{-}$$
$$30 < \nu\text{-}$$

where

N- is the maximum one of refractive indices of negative lens components in said partial lens group (GLP) in said last lens group (GL), and
$\nu$- is the minimum one of Abbe's numbers of the negative lens components in said partial lens group (GLP).

7. A lens system according to any one of claims 1 to 6, comprising

a stationary flare stop (FS), arranged around the optical axis, for shielding unnecessary rays when said partial lens group (GLP) in said last lens group (GL) moves in a direction substantially perpendicular to the optical axis upon vibration reduction.

8. A lens system capable of short distance photographing, comprising as seen from the object side in the indicated order:

- a first lens group (G1) having a positive refracting power;
- a second lens group (G2) having a negative refracting power; and
- a last lens group (GL) nearest to the image side having a positive refracting power;
  wherein
- when focusing is effected from infinity to a short distance object, an interval between said first and second lens groups (G1, G2) increases,
- a partial lens group (GLP) of said last lens group (GL) having a positive refracting power is a vibration reduction lens group, which is movable in a direction substantially perpendicular to the optical axis of the lens system,
- the lateral magnification $\beta M$ of the lens system at a shortest photographing distance satisfies the condition

$$|\beta M| > 0.25,$$

- and at least two intervals between two adjacent lens groups change for focusing.

9. A lens system according to claim 8, wherein

said partial lens group (GLP) in said last lens group (GL) is fixed in position along the optical axis in a short distance focusing state.

10. A lens system according to claim 8 or 9,
satisfying the conditions

$$0.3 < fL/f < 1.5$$
$$\Delta SLP/fLP < 0.5$$

where

fL is the focal length of said last lens group (GL),
f is the focal length of the entire lens system in an infinity photographing state,
fLP is the focal length of said partial lens group (GLP) in said last lens group (GL), and
$\Delta SLP$ is the maximum displacement amount of said partial lens group (GLP) in a direction perpendicular to the optical axis upon vibration reduction.

11. A lens system according to claim 8, 9 or 10,
satisfying the conditions

$WD/f < 5.0$

$|\Delta|/f < 0.5$

where

WD is the distance, along the optical axis, from an object to the lens surface nearest to the object side of said lens system in the shortest distance photographing state,

f is the focal length of the entire lens system in the infinity photographing state, and

$\Delta$ is the change amount of the on-axis air gap between said first and second lens groups (G1, G2) in the infinity photographing state and the shortest distance photographing state.

12. A lens system according to any one of claims 8 to 11, satisfying the conditions

$0.5a < fLP/fL < 2.5$

$L/f < 0.25$

where

fL is the focal length of said last lens group (GL),

fLP is the focal length of said partial lens group (GLP) in said last lens group (GL),

L is the on-axis thickness of said partial lens group (GLP), and

f is the focal length of the entire lens system in the infinity photographing state.

13. A lens system according to any one of claims 8 to 12, satisfying the conditions

$1.5 < N+$

$40 < \nu+$

where

N+ is the maximum one of the refractive indices of positive lens components in said partial lens group (GLP) in said last lens group (GL), and

$\nu+$ is the minimum one of the Abbe's numbers of the positive lens components in said partial lens group (GLP).

14. A lens system according to any one of claims 8 to 13, comprising

a stationary flare stop (FS), arranged around the optical axis, for shielding unnecessary rays when said partial lens group (GLP) in said last lens group (GL) moves in a direction substantially perpendicular to the optical axis upon vibration reduction.

# FIG. 1

G1   G2   GL

S   GLP

VIBRATION
REDUCTION
MECHANISM

1

EP 0 881 516 A1

# FIG. 2

EP 0 881 516 A1

FIG. 3

# FIG. 4

EP 0 881 516 A1

| | European Patent Office | EUROPEAN SEARCH REPORT | Application Number EP 98 10 7034 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 4 844 602 A (KITAGISHI ET AL) 4 July 1989 * column 9, line 33 - line 41 * * figures * | 1,8 | G02B27/64 G02B15/163 |
| A | PATENT ABSTRACTS OF JAPAN vol. 14, no. 317 (P-1073), 9 July 1990 -& JP 02 103014 A (MINOLTA), 16 April 1990 * abstract; figure * | 1,8 | |
| A | US 5 039 211 A (MARUYAMA) 13 August 1991 * the whole document * | 1,8 | |
| D,A | US 5 270 857 A (OIZUMI ET AL) 14 December 1993 * the whole document * -& JP 01 189621 A (CANON) -& JP 01 191112 A (CANON) -& JP 01 191113 A (CANON) | 1,8 | |

TECHNICAL FIELDS SEARCHED (Int.Cl.6)

G02B

The present search report has been drawn up for all claims

| Place of search | Date of completion of the search | Examiner |
|---|---|---|
| THE HAGUE | 29 September 1998 | Ward, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)